# EUROPEAN PATENT APPLICATION

(11) **EP 4 451 540 A1**
(43) Date of publication of application: **23.10.2024**
(21) Application number: 22923337.4
(22) Date of filing: 14.10.2022
(51) Int. Cl.: H02M 7/06

(54) **POWER SOURCE CIRCUIT AND APPLICATION THEREOF**

(30) Priority: 26.01.2022 CN 202210095101; 11.10.2022 CN 202211242958
(71) Applicant: Zhang, Yixing, Beijing 100088 (CN)
(72) Inventor: Zhang, Yixing, Beijing 100088 (CN)
(74) Representative: Gille Hrabal Partnerschaftsgesellschaft mbB Patentanwälte
(86) International application number: PCT/CN2022/125428
(87) International publication number: WO 2023/142537

(57) **Abstract**

The present disclosure discloses a power source circuit and an application thereof. A multi-phase AC power source is generated by means of a given AC power source by using an electromagnetic induction relationship between electrically conductive winding coils on a magnetically conductive iron core, routed through a multi-phase bridge rectifier circuit, and then directly used as a DC voltage source having a very small ripple factor to output DC voltage and current without capacitor filtering, thereby high-order harmonics caused by capacitor filtering are eliminated radically. In addition, the current in the multi-phase bridge rectifier circuit that is inputted from a power grid is a sine wave or a step wave that is very close to a sine wave, so that the high-order harmonics generated on an AC side is minimized without power factor correction.

## Description

### Technical Field

The present disclosure relates to the technical field of power sources, in particular to a power source circuit and an application thereof.

### Background Art

At present, the power grid supplies electric power to thousands of homes in the form of alternating current (AC), but all electric facilities commonly used, such as lighting devices, televisions, electric sound devices and computers, etc., require direct current (DC) power. In addition, all electric driving devices that require speed regulation (e.g., lifts, electric vehicles, high-speed trains, and precision machine tools, etc.) and all devices that require precision regulation and control also require DC power. Therefore, the power supply should be converted from AC to DC at the equipment side before it can be used.

The AC-DC conversion at the equipment side is generally carried out through rectification and capacitor filtering. The pulsating DC voltage obtained through rectification can become a stable DC voltage only after filtering. However, if capacitor filtering is used, the current at the AC side is pulse current involving a large number of high-order harmonics, which must be eliminated by power factor correction, in order to meet the provisions on high-order harmonics in the related standard (National Standard GB17625.1-2012/IEC61000-3-2:2009 "Electromagnetic compatibility - Limits - Limits for Harmonic Current Emissions (Equipment Input Current ≤ 16 A Per Phase)). This national standard is mandatory, and all products that don't meet the mandatory standard are prohibited from production, sale and import. Therefore, whether it is necessary to eliminate high-order harmonics through power factor correction is a problem that must be considered for any product of electric equipment product.

However, power factor correction is a very complicated task, which will greatly increase the cost of the DC power source, especially in the case of high-power power factor correction.

### Summary of the Invention

In view of the above problems, the present disclosure provides a power source circuit and an application thereof. A multi-phase AC power source is generated by means of a given AC power source by using an electromagnetic induction relationship between electrically conductive winding coils on a magnetically conductive iron core, and directly used as a DC voltage source having a very small ripple factor after routed through a multi-phase bridge rectifier circuit, to output DC voltage and current without capacitor filtering, thereby high-order harmonics caused by capacitor filtering are eliminated radically. In addition, the current in the multi-phase bridge rectifier circuit that is inputted from a power grid is a sine wave or a step wave that is very close to a sine wave, so that the high-order harmonics generated on an AC side is minimized without power factor correction.

In one aspect, the present disclosure provides a power source circuit, an n-phase AC power source is generated by means of a given AC power source by using an electromagnetic induction relationship between electrically conductive winding coils on a magnetically conductive iron core, and directly serves as a DC voltage source having a very small ripple factor after routed through an n-phase bridge rectifier circuit, to output DC voltage and current without capacitor filtering; wherein n is an odd number greater than or equal to 5; the n-phase AC power source refers to a group of n sine-wave voltage sources that have equal amplitudes and an initial phase interval of 360°/n, and are distributed evenly;
the n-phase bridge rectifier circuit consists of n groups of rectifier diodes connected pairwise in series, wherein an cathode of one diode in the two rectifier diodes connected pairwise in series is connected with an anode of the other diode in the two rectifier diodes, and each connection point is connected with an n-phase output end of the n-phase AC power source; the other cathodes of all the n groups of rectifier diodes connected pairwise in series are connected and serve as a positive output terminal of the n-phase bridge rectifier circuit, and the other anodes of all the n groups of rectifier diodes connected pairwise in series are connected and serve as a negative output terminal of the n-phase bridge rectifier circuit.

In addition to the aspect and any possible embodiment described above, another embodiment is further provided, wherein n is an odd number greater than or equal to 7.

In addition to the aspect and any possible embodiment described above, another embodiment is further provided, a 3m-phase AC power source induced on stator windings by a rotating magnetic field generated by the stator windings of a three-phase AC motor is used to output DC voltage and current through a 3m-phase bridge rectifier circuit, wherein m is an odd number greater than or equal to 3, and 3m = n.

In addition to the aspect and any possible embodiment described above, another embodiment is further provided, wherein m is an odd number greater than or equal to 5.

In addition to the aspect and any possible embodiment described above, another embodiment is further provided, an n-phase AC power source induced on a stator winding of a single-phase AC asynchronous motor by a rotating magnetic field during the operation of the single-phase AC asynchronous motor is used to output DC voltage and current through the n-phase bridge rectifier circuit.

In addition to the aspect and any possible embodiment described above, another embodiment is further provided, wherein n is an odd number greater than or equal to 7.

In addition to the aspect and any possible embodiment described above, another embodiment is further provided, the n-phase AC power source is a 3h-phase AC power source consisting of 3h groups of different windings combinations of the secondary windings of a three-phase AC transformer, and 3h AC voltage sources outputted by the 3h-phase AC power source output DC voltage and current through a 3h-phase bridge rectifier circuit; wherein h is an odd number greater than or equal to 3.

In addition to the aspect and any possible embodiment described above, another embodiment is further provided, wherein h is an odd number greater than or equal to 5.

In addition to the aspect and any possible embodiment described above, another embodiment is further provided, the 3h groups of different windings combinations of the secondary windings of the three-phase AC transformer employ a star connection mode, specifically: the windings in the 3h winding combinations are connected together at one, and the other ends of the windings in the 3h winding combinations are used as an output end of the 3h-phase AC power source to output DC voltage and current through the 3h-phase bridge rectifier circuit.

In addition to the aspect and any possible embodiment described above, another embodiment is further provided, the 3h groups of different winding combinations of the secondary windings of the three-phase AC transformer employ a polygonal connection mode, specifically: the windings in the 3h winding combinations are connected end to end sequentially, and a tail end of the windings in the last winding combination is connected with a head end of the windings in the first winding combination to form a closed loop, thereby 3h connection points are obtained and used as the output end of the 3h-phase AC power source to output DC voltage and current through the 3h-phase bridge rectifier circuit.

In another aspect, the present disclosure provides an application of the power source circuit as described in any of the above embodiments, the power source circuit is applied at a product end and connected with an AC power input end as the entirety of a product power source or a part of a product power source.

Compared with the prior art, one technical scheme in the above technical schemes has the following advantages or beneficial effects: the rectifier circuit in the present disclosure can rectify multi-phase alternating current, so as to obtain a stable DC voltage without subsequent filtering;
Another technical scheme in the above technical schemes has the following advantages or beneficial effects: the rectifier circuit in the present disclosure omits a filtering step and radically eliminates a large number of high-order harmonics caused by filtering, so that it is unnecessary to consider the problem of removing high-order harmonics in the electric equipment, the power factor correction step is omitted, the design of the electric equipment is simplified, and the production cost of the electric equipment is reduced;
Yet another technical scheme in the above technical schemes has the following advantages or beneficial effects: The rectifier circuit in the present disclosure can be applied at a power source end or intermediate in a power source path, so that it is possible for the power grid to supply electric power to homes in the form of direct current (DC), and it is also convenient to establish the connection between the DC electric equipment of users and the power source.

### Brief Description of the Drawings

In order to explain the technical scheme of the present disclosure more clearly, the accompanying drawings to be used herein will be briefly introduced below. Apparently, the accompanying drawings in the following description only illustrate some embodiments of the present disclosure. Those having ordinary skills in the art can obtain other drawings on the basis of those accompanying drawings without expending any creative labor.
Fig. 1 is a block diagram of the multi-phase bridge rectifier structure provided in an embodiment of the present disclosure, in which secondary winding combinations of n three-phase AC transformers are connected in a star connection mode;
Fig. 2 is a voltage waveform diagram of the 9-phase AC power source provided in an embodiment of the present disclosure;
Fig. 3 is a diagram of output DC voltage waveform rectified through the 9-phase bridge rectifier circuit provided in one embodiment of the present disclosure;
Fig. 4 is a diagram showing the corresponding relationship among step wave magnetic potentials W • I of the primary side and secondary side of the iron core of a three-phase transformer when a 9-phase AC power source generated by the secondary winding combinations of the three-phase transformer is connected to a 9-phase bridge rectifier circuit in an embodiment of the present disclosure;

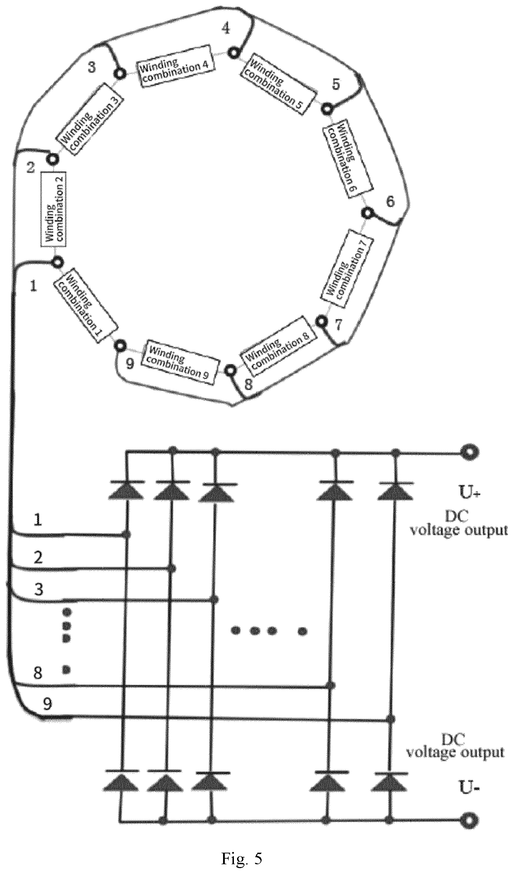

Fig. 5 shows a multi-phase bridge rectifier device for a 9-phase AC power source obtained by connecting the secondary winding combinations of a three-phase AC transformer in a polygonal connection mode in an embodiment of the present disclosure; and

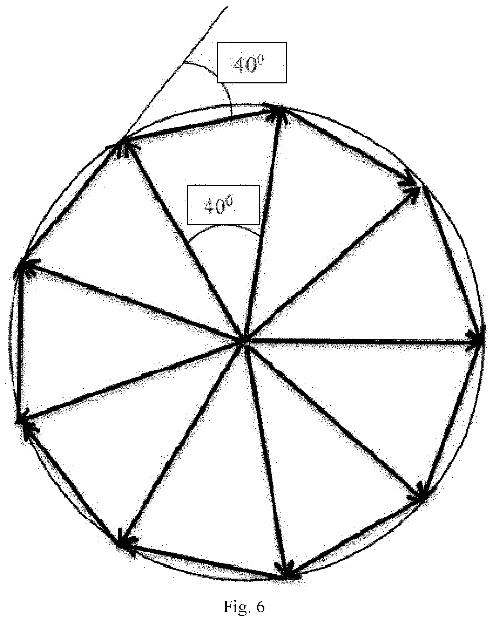

Fig. 6 shows the relationship between the exterior angles of a regular polygon (a regular 9-sided polygon) and the central angles of a circumscribed circle in an embodiment of the present disclosure, which corresponds to the situation of a 9-phase AC power source that can be obtained by connecting the secondary winding combinations of a three-phase AC transformer either in a polygonal connection mode or a star connection mode.

### Detailed Description of Embodiments

A specific embodiment will be discussed below in an example of a 9-phase bridge rectifier circuit of a 9-phase AC power source generated by the secondary windings of a 3-phase transformer.

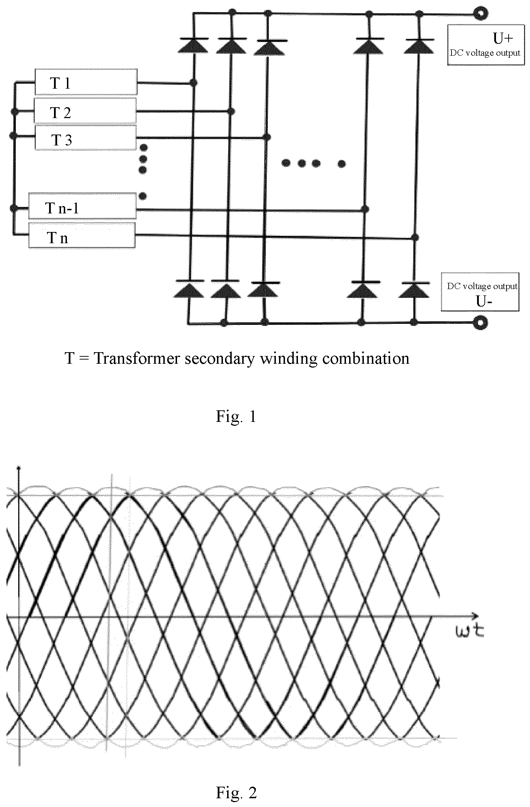

A block diagram of the 9-phase bridge rectifier circuit is shown in Fig. 1, where n=9.

The turns of the secondary windings of the three-phase AC transformer are in 5 different numbers, and the turn ratio is: N1 : N2 : N3 : N4 : N5 = Sin90° : Sin50° : Sin10° : Sin30° : Sin70°.

The five numbers of turns, plus positive and negative polarities, are linked in tandem in groups of three to form all required nine transformer secondary winding combinations, which are:
Transformer secondary winding combination 1:
   phase A N1 turns, phase B -N4 turns, and phase C -N4 turns;
Transformer secondary winding combination 2:
   phase A N2 turns, phase B N3 turns, and phase C -N5 turns;
Transformer secondary winding combination 3:
   phase A N3 turns, phase B N2 turns, and phase C -N5 turns;
Transformer secondary winding combination 4:
   phase A -N4 turns, phase B N1 turns, and phase C -N4 turns;
Transformer secondary winding combination 5:
   phase A -N5 turns, phase B N2 turns, and phase C N3 turns;
Transformer secondary winding combination 6:
   phase A -N5 turns, phase B N3 turns, and phase C N2 turns;
Transformer secondary winding combination 7:
   phase A -N4 turns, phase B -N4 turns, and phase C N1 turns;
Transformer secondary winding combination 8:
   phase A N3 turns, phase B -N5 turns, and phase C N2 turns;
Transformer secondary winding combination 9:
   phase A N2 turns, phase B -N5 turns, and phase C N3 turns.

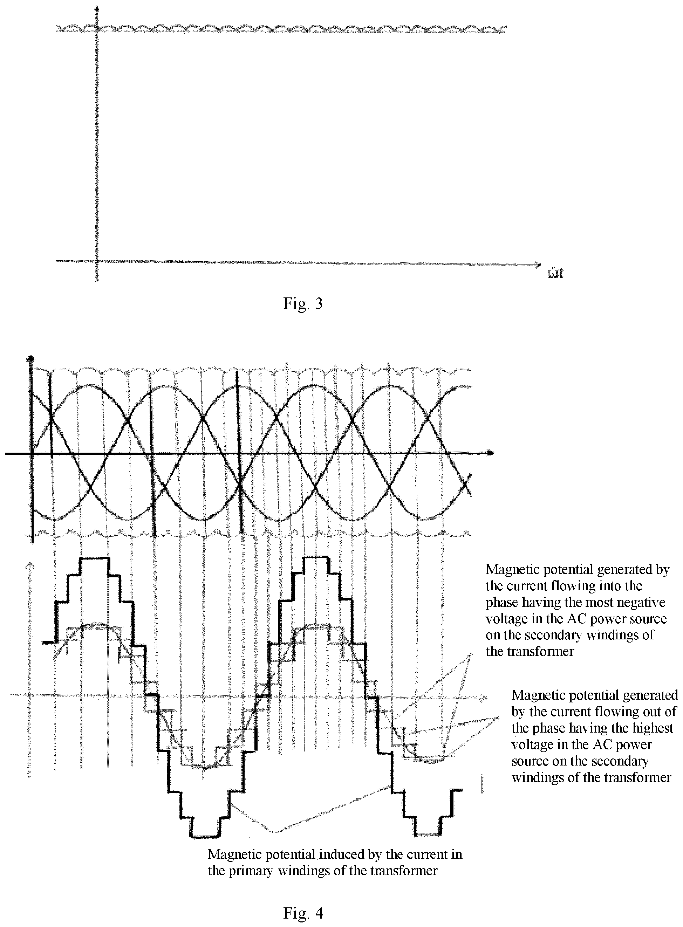

Fig. 1 shows the case in which the n winding combinations are connected in a star connection mode. When the n-phase AC power source is inputted to the n-phase rectifier bridge composed of 2N rectifier diodes in the present disclosure, a pulsating DC voltage with a very small ripple factor can be obtained without a filter capacitor, as shown in Fig. 3. It can be seen that the ripple factor in Fig. 4 is obviously reduced compared with that of a conventional three-phase rectification.

It is well known that the change rate of a continuous differentiable function at an extreme value is 0. Specifically, for a sine function, the gradients at the maximum value and minimum value are very low, and the absolute value is close to 1, For example, Sin80° = Sin100° = 0.98481.

In the example of a 9-phase bridge rectifier circuit, since Sin80° = Sin100° = 0.984819, the output DC pulsating voltage will vary between the extreme values (0.984819), and its ripple factor will be smaller than 1%. With such a small ripple factor, there is no need for filtering. Similarly, if n = 15, since Sin84° = 0.99452, the ripple factor will be smaller than 0.3%; therefore, filtering is even more unnecessary.

## Claims

1. A power source circuit, wherein: an n-phase alternating current AC power source is generated by means of a given AC power source by using an electromagnetic induction relationship between electrically conductive winding coils on a magnetically conductive iron core, and directly serves as a DC voltage source having a very small ripple factor after routed through an n-phase bridge rectifier circuit to output DC voltage and current; wherein n is an odd number greater than or equal to 5;
the n-phase AC power source refers to a group of n sine-wave voltage sources that have equal amplitudes and an initial phase interval of 360°/n, and are distributed evenly;
the n-phase bridge rectifier circuit consists of n groups of rectifier diodes connected pairwise in series, wherein an cathode of one diode in the two rectifier diodes connected pairwise in series is connected with an anode of the other diode in the two rectifier diodes, and each connection point is connected with an n-phase output end of the n-phase AC power source; the other cathodes of all the n groups of rectifier diodes connected pairwise in series are connected and serve as a positive output terminal of the n-phase bridge rectifier circuit, and the other anodes of all the n groups of rectifier diodes connected pairwise in series are connected and serve as a negative output terminal of the n-phase bridge rectifier circuit.

2. The power source circuit of claim 1, wherein n is an odd number greater than or equal to 7.

3. The power source circuit of claim 1, wherein a 3m-phase AC power source induced on stator windings by a rotating magnetic field generated by the stator windings of a three-phase AC motor is used to output DC voltage and current through a 3m-phase bridge rectifier circuit, wherein m is an odd number greater than or equal to 3, and 3m = n.

4. The power source circuit of claim 3, wherein m is an odd number greater than or equal to 5.

5. The power source circuit of claim 1, wherein an n-phase AC power source induced on a stator winding of a single-phase AC asynchronous motor by a rotating magnetic field during the operation of the single-phase AC asynchronous motor is used to output DC voltage and current through the n-phase bridge rectifier circuit.

6. The power source circuit of claim 5, wherein n is an odd number greater than or equal to 7.

7. The power source circuit of claim 1, wherein the n-phase AC power source is a 3h-phase AC power source consisting of 3h groups of different windings combinations of secondary windings of a three-phase AC transformer, and 3h AC voltage sources outputted by the 3h-phase AC power source output DC voltage and current through a 3h-phase bridge rectifier circuit; wherein h is an odd number greater than or equal to 3.

8. The power source circuit of claim 7, wherein the 3h groups of different windings combinations of the secondary windings of the three-phase AC transformer employ a star connection mode, specifically: the windings in the 3h winding combinations are connected together at one ends, and the other ends of the windings in the 3h winding combinations are used as an output end of the 3h-phase AC power source to output DC voltage and current through the 3h-phase bridge rectifier circuit.

9. The power source circuit of claim 7, wherein the 3h groups of different winding combinations of the secondary windings of the three-phase AC transformer employ a polygonal connection mode, specifically: the windings in the 3h winding combinations are connected end to end sequentially, and a tail end of the windings in the last winding combination is connected with a head end of the windings in the first winding combination to form a closed loop, thereby 3h connection points are obtained and used as the output end of the 3h-phase AC power source to output DC voltage and current through the 3h-phase bridge rectifier circuit.

10. An application of the power source circuit of any of claims 1-9, wherein the power source circuit is applied at a product end and is connected with an AC power input end as an entirety product power source or a part of a product power source.
